# EUROPÄISCHE PATENTANMELDUNG

(11) **EP 4 756 388 A1**
(43) Veröffentlichungstag der Anmeldung: **10.06.2026**
(21) Anmeldenummer: 24217260.9
(22) Anmeldetag: 03.12.2024
(51) Int. Cl.: G01G 19/10, G01G 19/12

(54) **WIEGESYSTEM FÜR EINEN MULDENKIPPER UND VERFAHREN ZUR BESTIMMUNG EINES GEWICHTS EINER MULDE EINES MULDENKIPPERS**

(71) Anmelder: Schmitz Cargobull AG, 48341 Altenberge (DE)
(72) Erfinder: Hey, Jeffrey, 99867 Gotha (DE)
(74) Vertreter: Baur & Weber Patentanwälte PartG mbB

(57) **Zusammenfassung**

Es wird ein Wiegesystem für einen Muldenkipper beschrieben, der insbesondere als Sattelauflieger (6) ausgebildet ist, das einen Drucksensor (28), der mit einer hydraulischen Kippvorrichtung (26) einer Mulde (8) des Muldenkippers gekoppelt ist, und eine oder mehrere Wiegezellen (18) umfasst, die jeweils an einem Kipplager (10) des Muldenkippers angeordnet sind, wobei das Wiegesystem (30) Daten des Drucksensors (28) und der Wiegezellen (18) in einem Zustand mit abgesenkter Mulde (8) und in einem Zustand mit um einen vorgegebenen Kippwinkel (22) angehobener Mulde (8) erfasst und aus den Daten ein Gewicht der Mulde (8) ausgibt. Außerdem wird ein Verfahren zur Bestimmung eines Gewichts einer Mulde (8) eines Muldenkippers angegeben.

## Beschreibung

Die Erfindung betrifft ein Wiegesystem für einen Muldenkipper und ein Verfahren zur Bestimmung eines Gewichts einer Mulde eines Muldenkippers.

Aus dem allgemeinen Stand der Technik sind bereits Muldenkipper bekannt, die beispielsweise als Baustellenfahrzeuge Schüttgut transportieren und an Baustellen liefern. Üblicherweise wird diese Ladung in einer Kiesgrube, einer Sandgrube oder bei einem Baustoffhändler auf den Muldenkipper geladen und anschließend an die Baustelle transportiert. Dabei ist es üblich, dass die Kosten über das Ladungsgewicht verrechnet werden. Dazu wird der Muldenkipper vor der Beladung auf eine Waage gefahren, so dass sein Leergewicht bestimmt werden kann. Nach dem Befüllen des Muldenkippers muss dieser erneut zur Wiegestation fahren, sodass das Ladungsgewicht nach Subtraktion des Leergewichts bestimmt werden kann.

Das mehrmalige Anfahren der Wiegestation führt jedoch zu einem Zeitverlust beim Beladen des Muldenkippers, der noch zusätzlich verstärkt werden kann, wenn sich bereits mehrere Fahrzeuge zum Beladen eingefunden haben.

Als Alternative zu den gängigen, fest installierten Wiegestationen sind bereits mehrere Lösungen bekannt, bei denen das Gewicht der Ladung am Fahrzeug bestimmt werden kann.

So ist aus der US 2010/0211356 A1 eine Vorrichtung zur Gewichtsbestimmung für ein Baustellenfahrzeug gezeigt. Das Baustellenfahrzeug weist zylindrische Federelemente auf, die mit Drucksensoren verbunden sind, so dass aus dem Druck im Inneren der Stoßdämpfer ein Ladungsgewicht bestimmt werden kann.

In der EP 2 787 330 A1 wird ein Wiegesystem sowie ein Verfahren zum Wiegen einer Ladung eines Kippsattelzugs angegeben, bei dem über einen Aufstellwinkel einer Kippmulde, einer Aufrichtkraft beim Aufstellen der Kippmulde und einem Schwerpunkt der Kippmulde nebst Ladung eine Bestimmung des Ladungsgewichts erfolgt. Dazu werden Sensoren verwendet, die den Hydraulikdruck innerhalb einer Teleskopvorrichtung zum Ankippen der Kippmulde und den Luftdruck innerhalb einer Luftdruckfederung des Aufliegers messen.

Die FR 3 055 964 A1 beschreibt eine Wiegevorrichtung eines Anhängers oder LKWs mit einem Fahrgestell, auf dem ein Behälter montiert ist, und einer Hinterachse, die das Gewicht des hinteren Teils des Behälters trägt, wobei der Behälter mittels einer hydraulischen Hebevorrichtung nach hinten mittels eines Schwenkgelenks kippbar ist. Die Wiegevorrichtung umfasst einen vorderen Sensor, der in der Nähe der hydraulischen Hebevorrichtung angeordnet ist, einen pneumatischen Drucksensor, der den Druck in der hinteren der beiden Achsen-Aufhängungen des Fahrzeugs misst, und einen Rechner, der die von den Sensoren gemessenen Daten empfängt und auf der Grundlage dieser gemessenen Daten und Kalibrierungswerte ein Ergebnis berechnet, das dem Gewicht des Inhalts des Behälters entspricht.

Aus der RU 103 186 U1 ist eine Vorrichtung zum Wiegen von Fracht im Aufbau eines Kipplasters bekannt, die Scharniere, die das Heck des Aufbaus des Lasters mit dem Fahrgestell des Lasters verbinden, und einen hydraulischen Hubzylinder enthält, der durch die Scharniere mit dem Aufbau des Lasters und dem Fahrgestell des Lasters verbunden ist, während die Achse der Scharniere, die das Heck des Aufbaus des Lasters mit seinem Fahrgestell verbinden, in Form von Dehnungsmessstreifen-Gewichtssensoren hergestellt ist. Der Hubzylinders ist ebenfalls mittels eines Dehnungsmessstreifen-Gewichtssensors mit dem Fahrgestell verbunden.

Die BE 1 014 524 A6 beschreibt ein Wiegesystem, das aus einem Hydraulikdrucksensor und einem Luftdrucksensor besteht, sodass das korrekte Gewicht angezeigt wird, indem die bereits vorhandenen Elemente des Hydraulikzylinders und des Luftdruckbalgs genutzt werden, die jeweils mit dem Öldrucksensor und dem Luftdrucksensor verbunden sind, die einen Druckanstieg als Folge einer Massenzunahme detektieren. Die Drucksensoren müssen so montiert werden, dass eine konstante Gesamtdruckdifferenz gemessen wird, die unabhängig vom Ort der Masse ist.

Die CN 101 788 326 A bezieht sich auf eine Wiegevorrichtung für einen Kipplaster, die eine Sensorkombination und ein Wiegeinstrument umfasst. Die Sensorkombination ist zwischen einem unteren Teil eines Fahrgestells und einem Lastwagenbalken angeordnet, und das auf einem Lastwagenkopf angeordnete Wiegeinstrument dient zur Aufnahme eines Sensorkombinationssignals. Die Sensorkombination umfasst einen Achsbolzensensor, der am hinteren Teil des Balkens des Kipplasters angeordnet ist, und einen Drucksensor, der auf dem Balken des Kipplasters angeordnet und mit einer Ölauslassleitung verbunden ist, die mit einer hydraulischen Stützstange verbunden ist.

Ausgehend von diesem Stand der Technik hat sich der Erfinder nun die Aufgabe gestellt, ein Wiegesystem für einen Muldenkipper und ein Verfahren zur Bestimmung eines Gewichts einer Mulde eines Muldenkippers zu schaffen, welche eine hohe Genauigkeit aufweisen, aber dennoch kostengünstig bereitgestellt werden können.

Diese Aufgabe wird durch die Merkmale der unabhängigen Patentansprüche gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Wiegesystem für einen Muldenkipper angegeben, der insbesondere als Sattelauflieger ausgebildet ist, wobei das Wiegesystem einen Drucksensor, der mit einer hydraulischen Kippvorrichtung einer Mulde des Muldenkippers gekoppelt ist, und eine oder mehrere Wiegezellen umfasst, die jeweils an einem Kipplager des Muldenkippers angeordnet sind, wobei das Wiegesystem Daten des Drucksensors und der Wiegezellen in einem Zustand mit abgesenkter Mulde und in einem Zustand mit um einen vorgegebenen Kippwinkel angehobener Mulde erfasst und aus den Daten ein Gewicht der Mulde ausgibt.

Bei einem Muldenkipper ruht das Gewicht der Mulde auf der hydraulischen Kippvorrichtung und den Kipplagern. Die hydraulische Kippvorrichtung ist typischerweise als teleskopierbare Vorrichtung ausgebildet. Die Kipplager sind im Heckbereich der Mulde an gegenüberliegenden Seiten angebracht. Wie in der oben zitierten russischen Schrift bereits beschrieben wurde, kann durch Anbringen von Gewichtssensoren in Form von Dehnungsstreifen an diesen drei Auflagestellen das Gewicht der Mulde bzw. deren Inhalts bestimmt werden. Dies erfordert jedoch eine geeignete Anbindung oder Anpassung sowohl am Kipplager als auch an der Kippvorrichtung, um die Gewichtssensoren aufnehmen zu können, was insbesondere dann größere Umbauten auffordert, wenn keine der dort beschriebenen Lagerbuchsen vorhanden sind. Des Weiteren ist diese Vorgehensweise sehr kostenintensiv. Andere bereits bekannte Lösungen verwenden anstelle von Gewichtssensoren an den Kipplagern pneumatische Sensoren der Luftfederung und Hydrauliksensoren der Kippvorrichtung, wodurch der Aufwand für die Bereitstellung eines Wiegesystems geringgehalten werden kann. Da jedoch auch andere Steuereinrichtungen auf die Luftfederung zugreifen können, erfordert diese Lösung einen hohen Aufwand bei der Auswertung der Signale der Sensoren. Des Weiteren benötigt die Luftfederung eine gewisse Einschwingzeit, um ein stabiles Ausgangssignal zu liefern. Wiederum andere Lösungen verwenden lediglich einen Hydrauliksensor an der Kippvorrichtung, wo wobei hier jedoch eine kontinuierliche Datenaufnahme während eines Kippvorgangs erforderlich ist, um ein Ladungsgewicht bestimmen zu können. Zwar ist hier der Aufwand für die Implementierung der nötigen Komponenten gering, das Resultat der Gewichtsbestimmung weist jedoch oftmals keine hohe Präzision auf, was die Akzeptanz des Wiegesystems verringert.

Erfindungsgemäß werden an den Kipplagern Wiegezellen verwendet, die eine hohe Genauigkeit aufweisen und im Vergleich zu pneumatischen Sensoren eine kürzere Einschwingzeit benötigen. Im Bereich der hydraulischen Kippvorrichtung ist ein Drucksensor vorgesehen, wobei hier jedoch keine kontinuierliche Messung während des Aufstellens der Mulde erfolgt, sondern lediglich zwei Messungen bei abgesenkter Mulde und bei geringfügig aufgestellter Mulde um einen vorgegebenen Winkel durchgeführt werden, was in Kombination mit den Wiegezellen die Komplexität der Auswertung deutlich reduziert. Falls nicht ohnehin bereits vorhanden, lässt sich der Drucksensor an der hydraulischen Kippvorrichtung ohne größeren Aufwand nachrüsten und stellt die Druckwerte im Inneren des Hydraulikzylinders mit der geforderten Genauigkeit bereit. Um ein eichfähiges Wiegesystem schaffen zu können, ist eine Genauigkeit von 1 % erforderlich, was typischerweise in etwa 1 bar Auflösung am Drucksensor entspricht. Auf diese Weise lässt sich ein präzises, aber dennoch kostengünstiges Wiegesystem schaffen.

Gemäß einer Ausführungsform der Erfindung erfasst ein Winkelsensor den vorgegebenen Winkel.

Um das Erreichen des vorgegebenen Winkels detektieren zu können, ist es vorteilhaft, einen Winkelsensor am Kipplager anzubringen, der den Aufstellwinkel der Mulde relativ zu einem Chassis des Muldenkippers bestimmt.

Gemäß einer weiteren Ausführungsform der Erfindung beträgt der vorgegebene Winkel weniger als 20°.

Zur Durchführung der Gewichtsbestimmung ist ein Anstellen der Mulde um einen kleineren Winkel ausreichend. Dazu werden typischerweise Werte für den vorgegebenen Winkel verwendet, die kleiner als 20° sind, wobei auch Werte bis ca. 5° möglich sind. Auf diese Weise kann sichergestellt werden, dass das in der Mulde befindliche Schüttgut im Wesentlichen wie bei der Befüllung verbleibt und nicht in Richtung einer Heckklappe an der Kippmulde verrutscht.

Gemäß einer weiteren Ausführungsform der Erfindung weist die hydraulische Kippvorrichtung ein Abschaltventil auf, welches das Kippen der Mulde bei Erreichen des vorgegebenen Kippwinkels beendet.

Das Erreichen des vorgegebenen Winkels kann insbesondere in Zusammenspiel mit dem Winkelsensor über das Abschaltventil eine automatische Abschaltung des Ankippens der Mulde auslösen, wodurch die Benutzung des Wegesystems vereinfacht wird und gleichzeitig eine hohe Reproduzierbarkeit der Messung erzielt werden kann.

Gemäß einer weiteren Ausführungsform der Erfindung sind die Wiegezellen zwischen den Kipplagern und der Mulde angeordnet.

Um die Wiegezellen an dieser Stelle anbringen zu können, ist üblicherweise eine Anpassung der Form der Mulde erforderlich, sodass dem nun geringfügig erhöhten Auflagepunkt der Mulde Rechnung getragen wird.

Gemäß einer weiteren Ausführungsform der Erfindung sind die Wiegezellen zwischen den Kipplagern und einem Rahmen des Muldenkippers angeordnet.

Anders als in der vorigen Ausführungsform wird hier zusätzlicher Bauraum in Richtung eines Chassis benötigt, um die Wiegezellen aufnehmen zu können.

Gemäß einer weiteren Ausführungsform der Erfindung sind die Wiegezellen als zweiarmiger Dehnungssensor ausgeführt.

Derartige Sensoren können zum einen die hohe Belastung von mehreren Tonnen als auch die geforderte Genauigkeit bei der Gewichtsbestimmung bereitstellen.

Gemäß einer weiteren Ausführungsform der Erfindung sind Daten der Sensoren und der Wiegezellen über eine Steuereinheit mit einem elektronischen Bremssystem gekoppelt.

Auf diese Weise lässt sich das so bestimmte Ladungsgewicht an andere Systeme weitergeben.

Gemäß einer weiteren Ausführungsform der Erfindung sind zwei Wiegezellen für zwei Kipplager vorgesehen.

Typischerweise werden bei einer Muldenkipper Kipplager paarweise angeordnet. Die Erfindung lässt sich aber auch bei anderen Varianten anwenden.

Außerdem wird ein Muldenkipper, insbesondere als Sattelauflieger, beschrieben, der ein Wiegesystem wie oben angegeben aufweist.

Sattelauflieger werden oftmals mit unterschiedlichem Schüttgut beladen, was die Bestimmung eines Gesamtgewichts des Fahrzeugs erfordert. Mittels der Erfindung lässt sich dies auf einfache, aber dennoch präzise Weise durchführen.

Des Weiteren wird ein Verfahren zur Bestimmung eines Gewichts einer Mulde eines Muldenkippers angegeben, bei dem ein Drucksensor bereitgestellt wird, der mit einer hydraulischen Kippvorrichtung einer Mulde des Muldenkippers gekoppelt ist, und bei dem wenigstens zwei Wiegezellen bereitgestellt werden, die jeweils an einem Kipplager des Muldenkippers angeordnet sind, wobei Daten des Drucksensors und der Wiegezellen in einem ersten Zustand mit abgesenkter Mulde erfasste werden, Daten des pneumatischen Sensors und der Wiegezellen in einem zweiten Zustand mit um einen vorgegebenen Kippwinkel angehobener Mulde erfasst werden und lediglich aus den Daten der beiden Zustände das Gewicht der Mulde bestimmt wird.

Erfindungsgemäß werden dabei lediglich zwei Messpunkte bei abgesenkter und geringfügig angehobener Mulde benötigt, was die Komplexität des Verfahrens deutlich reduziert.

Gemäß einer Ausführungsform des erfindungsgemäßen Verfahrens wird ein Winkelsensor bereitgestellt, der den vorgegebenen Winkel erfasst, wobei der vorgegebene Winkel weniger als 20° beträgt.

Gemäß einer weiteren Ausführungsform des erfindungsgemäßen Verfahrens weist die hydraulische Kippvorrichtung ein Abschaltventil auf, welches bei Erreichen des vorgegebenen Kippwinkels das weitere Kippen der Mulde beendet.

Schließlich wird eine Steuereinheit beschrieben, die eine Verarbeitungseinrichtung aufweist, welche geeignet ist, ein Verfahren wie oben angegeben auszuführen.

Die Steuereinheit kann beispielsweise über einen Prozessor so programmiert werden, dass sie das erfindungsgemäße Verfahren durchführen kann. Das Ergebnis kann beispielsweise über eine Funkschnittstelle ausgegeben werden.

Die Steuereinheit kann mit einem elektronischen Bremssystem gekoppelt werden.

Auf diese Weise lässt sich das so bestimmte Ladungsgewicht an andere Systeme weitergeben.

Nachfolgend werden einige Ausführungsbeispiele anhand der Zeichnung näher erläutert. Es zeigen:
- Figur 1: die Verwendung eines erfindungsgemäßen Wiegesystems mit einem Sattelzug in einer Seitenansicht bei einer abgesenkten Mulde,
- Figur 2: die Verwendung des erfindungsgemäßen Wiegesystems mit dem Sattelzug der Figur 1 in einer Seitenansicht bei angehobener Mulde,
- Figur 3: das erfindungsgemäße Wiegesystems in einer Detailansicht im Bereich eines Kipplagers in einer Seitenansicht, und

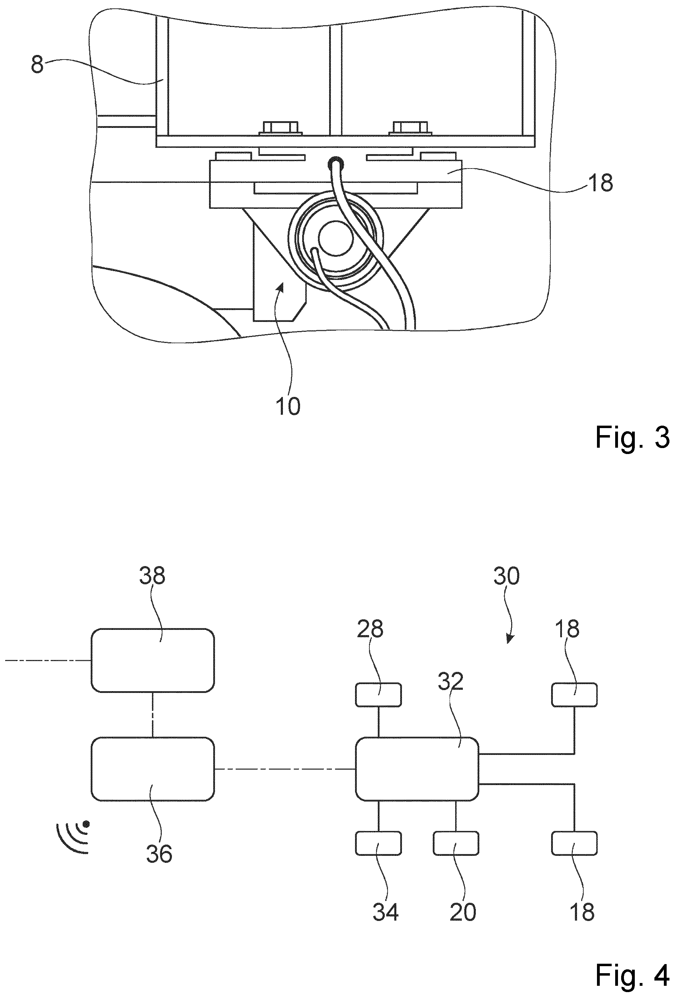

- Figur 3: das erfindungsgemäße Wiegesystems in einem schematischen Blockdiagramm.

In den Figuren sind gleiche oder funktional gleichwirkende Komponenten mit den gleichen Bezugszeichen versehen.

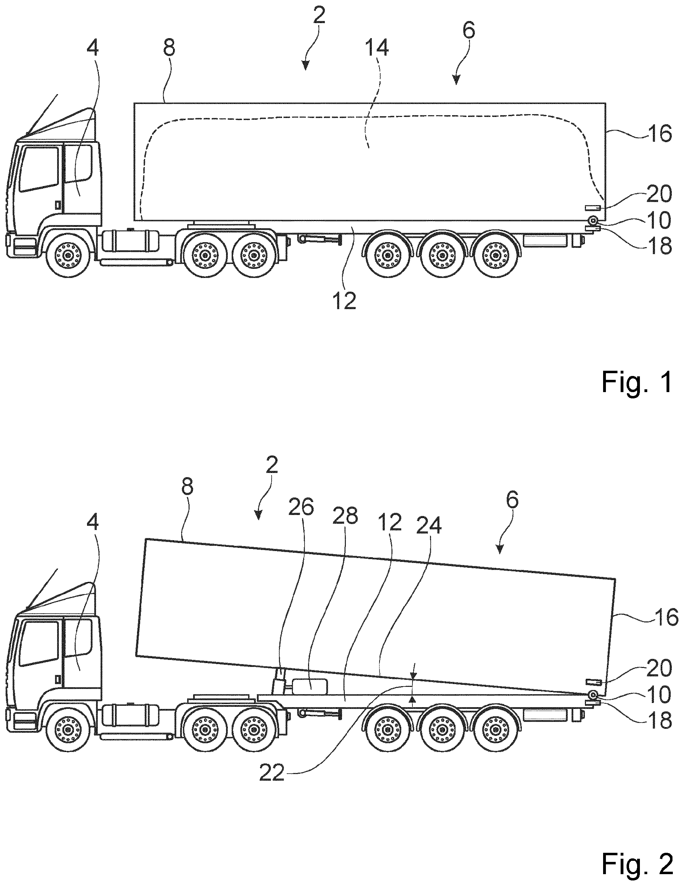

In Figur 1 ist in einer Seitenansicht ein als Muldenkipper ausgebildeter Sattelzug 2 gezeigt. Der Sattelzug 2 weist ein Zugfahrzeug 4 und einen daran angekoppelten Sattelauflieger 6 auf, der mit einer kippbaren Mulde 8 ausgestattet ist.

Die Mulde 8 ist über ein Kipplager 10 relativ zu einem Chassis 12 aufstellbar. In das Innere der Mulde 8 kann Schüttgut 14 eingebracht werden, welches über eine Heckklappe 16 durch Ankippen der Mulde 8 entladen werden kann. Für das erfindungsgemäße Wiegesystem ist nun im Bereich des Kipplagers 10 jeweils eine Wiegezeile 18 vorgesehen. Des Weiteren weist der Sattelauflieger 6 einen Winkelsensor 20 zur Bestimmung des Kippwinkels der Mulde 8 auf.

Unter Bezugnahme auf Figur 2 werden nun weitere Komponenten des erfindungsgemäßen Wiegesystems dargestellt. In Figur 2 ist die Mulde 8 um den Kippwinkel 22 angehoben. Der Kippwinkel 22 wird typischerweise zwischen Chassis 12 und einem Boden 24 der Mulde 8 angegeben und kann vom Winkelsensor 20 bestimmt werden. Des Weiteren ist in Figur 2 eine hydraulische Kippvorrichtung 26 zu erkennen, welche als teleskopierbare Vorrichtung die Mulde 8 relativ zum Chassis 12 anheben kann. Die hydraulische Kippvorrichtung 26 ist mit einem Drucksensor 28 gekoppelt, der den Hydraulikdruck im Inneren der Kippvorrichtung 26 bestimmt.

Aus den Werten der Wiegezellen 18 und des Drucksensors 28 kann das Gewicht der Mulde 8 und bei bekanntem Leergewicht der Mulde 8 somit das Gewicht des Schüttgut 14 bestimmt werden. Dazu werden Daten der Wiegezellen 18 und des Drucksensors 28 sowohl im abgesenkten Zustand, wie in Figur 1 dargestellt, als auch im angehobenen Zustand um einen vorgegebenen Winkel des Kippwinkels 22, wie in Figur 2 dargestellt, ausgewertet. Der vorgegebene Winkel beträgt weniger als 20°. Doch Auswertung dieser Daten lässt sich eine präzise Bestimmung des Gewichts der Mulde 8 bzw. des Schüttgut 14 durchführen.

In Figur 3 ist die Anbindung der Mulde 8 an das Kipplager 10 im Detail gezeigt. Man erkennt, dass zwischen der Mulde 8 und dem Kipplager 10 die Wiegezelle 18 als zweiarmiger Dehnungssensor angeordnet ist.

In Figur 4 ist das Wiegesystem 30 nochmals in einem Blockdiagramm gezeigt. Das Wiegesystem 30 umfasst eine Datenerfassungseinheit 32, welche mit den beiden Wiegezellen 18, dem Winkelsensor 20 und dem Drucksensor 28 verbunden ist. Zusätzlich kann die Datenerfassungseinheit 32 mit einem Abschaltventil 34 verbunden werden, welches das weitere Ankippen der Mulde 8 bei Erreichen des vorgegebenen Winkels unterbindet. Die Datenerfassungseinheit 32 kann darüber hinaus mit einem Steuergerät 36 verbunden werden, welches beispielsweise eine Funkschnittstelle aufweist, um die so gewonnenen Daten bzw. ausgewerteten Ergebnisse weiterzugeben. Ebenso kann dieses Steuergerät 36 mit einem elektronischen Bremssystem 38 verbunden sein, sodass die Daten auch anderen Komponenten des Sattelzugs 2 zur Verfügung stehen oder an externe Empfänger weitergegeben werden können.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Sattelzug
- 4: Zugfahrzeug
- 6: Sattelauflieger
- 8: Mulde
- 10: Kipplager
- 12: Chassis
- 14: Schüttgut
- 16: Heckklappe
- 18: Wiegezelle
- 20: Winkelsensor
- 22: Kippwinkel
- 24: Boden
- 26: Kippvorrichtung
- 28: Drucksensor
- 30: Wiegesystem
- 32: Datenerfassungseinheit
- 34: Abschaltventil
- 36: Steuergerät
- 38: Bremssystem

## Patentansprüche

1. Wiegesystem für einen Muldenkipper, der insbesondere als Sattelauflieger (6) ausgebildet ist, das einen Drucksensor (28), der mit einer hydraulischen Kippvorrichtung (26) einer Mulde (8) des Muldenkippers gekoppelt ist, und eine oder mehrere Wiegezellen (18) umfasst, die jeweils an einem Kipplager (10) des Muldenkippers angeordnet sind, wobei das Wiegesystem (30) Daten des Drucksensors (28) und der Wiegezellen (18) in einem Zustand mit abgesenkter Mulde (8) und in einem Zustand mit um einen vorgegebenen Kippwinkel (22) angehobener Mulde (8) erfasst und aus den Daten ein Gewicht der Mulde (8) ausgibt.

2. Wiegesystem nach Anspruch 1, bei dem ein Winkelsensor (20) den vorgegebenen Winkel erfasst.

3. Wiegesystem nach Anspruch 1 oder 2, bei dem der vorgegebene Winkel weniger als 20° beträgt.

4. Wiegesystem nach einem der Ansprüche 1 bis 3, bei dem die hydraulische Kippvorrichtung (26) ein Abschaltventil (34) aufweist, welches das Kippen der Mulde (8) bei Erreichen des vorgegebenen Kippwinkels beendet.

5. Wiegesystem nach einem der Ansprüche 1 bis 3, bei dem die Wiegezellen (18) zwischen den Kipplagern (10) und der Mulde (8) angeordnet sind.

6. Wiegesystem nach einem der Ansprüche 1 bis 5, bei dem die Wiegezellen (18) zwischen den Kipplagern (10) und einem Chassis (12) des Muldenkippers angeordnet sind.

7. Wiegesystem nach einem der Ansprüche 1 bis 6, bei dem die Wiegezellen (18) als zweiarmiger Dehnungssensor ausgeführt sind.

8. Wiegesystem nach einem der Ansprüche 1 bis 7, bei dem Daten der Sensoren (20; 28) und der Wiegezellen (18) über eine Steuereinheit (36) mit einem elektronischen Bremssystem (38) gekoppelt sind.

9. Wiegesystem nach einem der Ansprüche 1 bis 8, bei dem zwei Wiegezellen (18) für die zwei Kipplager (10) vorgesehen sind.

10. Muldenkipper, insbesondere Sattelauflieger (6), der ein Wiegesystem (30) nach einem der Ansprüche 1 bis 9 aufweist.

11. Verfahren zur Bestimmung eines Gewichts einer Mulde (8) eines Muldenkippers, bei dem ein Drucksensor (28) bereitgestellt wird, der mit einer hydraulischen Kippvorrichtung (26) der Mulde (8) des Muldenkippers gekoppelt ist, und bei dem wenigstens zwei Wiegezellen (18) bereitgestellt werden, die jeweils an einem Kipplager (10) des Muldenkippers angeordnet sind, wobei Daten des Drucksensors (28) und der Wiegezellen (18) in einem ersten Zustand mit abgesenkter Mulde (8) erfasste werden, Daten des Drucksensors (28) und der Wiegezellen (18) in einem zweiten Zustand mit um einen vorgegebenen Kippwinkel angehobener Mulde () erfasst werden und lediglich aus den Daten der beiden Zustände das Gewicht der Mulde (8) bestimmt wird.

12. Verfahren nach Anspruch 11, bei dem ein Winkelsensor (20) bereitgestellt wird, der den vorgegebenen Winkel erfasst, wobei der vorgegebene Winkel weniger als 20° beträgt.

13. Verfahren nach Anspruch 11 oder 12, bei dem die hydraulische Kippvorrichtung ein Abschaltventil (34) aufweist, welches bei Erreichen des vorgegebenen Kippwinkels das weitere Kippen der Mulde (8) beendet.

14. Steuereinheit (36), die eine Verarbeitungseinrichtung (32) aufweist, welche geeignet ist, ein Verfahren nach einem der Ansprüche 11 bis 13 auszuführen.

15. Steuereinheit (36) nach Anspruch 14, die mit einem elektronischen Bremssystem (38) gekoppelt wird.
